Europäisches Patentamt

European Patent Office

Office européen des brevets

(19)

(11) Veröffentlichungsnummer: **0 070 579**
**B1**

(12)

# EUROPÄISCHE PATENTSCHRIFT

(45) Veröffentlichungstag der Patentschrift:
**12.03.86**

(51) Int. Cl.⁴: **C 08 F 240/00**

(21) Anmeldenummer: **82200447.9**

(22) Anmeldetag: **14.04.82**

(54) Kohlenwasserstoffharze mit einer OH-Zahl grösser als 6 und mit schwachem Phenolgeruch sowie Verfahren zu ihrer Herstellung.

(30) Priorität: **22.07.81 DE 3128869**

(43) Veröffentlichungstag der Anmeldung:
**26.01.83 Patentblatt 83/4**

(45) Bekanntmachung des Hinweises auf die Patenterteilung:
**12.03.86 Patentblatt 86/11**

(84) Benannte Vertragsstaaten:
**DE FR GB IT NL**

(56) Entgegenhaltungen:
**DE - B - 1 520 408**
**US - A - 4 210 733**

(73) Patentinhaber: **Rütgerswerke Aktiengesellschaft,
Mainzer Landstrasse 217, D-6000 Frankfurt
a.Main 1 (DE)**

(72) Erfinder: **Bucksch, Günter, Varziner Strasse 16,
D-4100 Duisburg 12 (DE)**
Erfinder: **Tyras, Herbert, Polarpfad 1,
D-4100 Duisburg 12 (DE)**
Erfinder: **Beneke, Herbert, Dr., Wartburgstrasse 97,
D-4620 Castrop-Rauxel (DE)**
Erfinder: **Stäglich, Peter, Dr., Weissdornstrasse 33,
D-4100 Duisburg 29 (DE)**
Erfinder: **Mühlenkamp, Manfred, Bahnhofstrasse 46,
D-4100 Duisburg 12 (DE)**

## Beschreibung

Die Erfindung betrifft neue Kohlenwasserstoffharze mit einer OH-Zahl grösser als 6, die aber nur schwach nach Phenol riechen.

Kohlenwasserstoffharze, die in Gegenwart von Phenol hergestellt werden, haben eine grosse Bedeutung als Klebstoffe. Bei derartigen Harzen beträgt die zugesetzte Phenolmenge etwa 10 bis 20% der Menge der polymerisierbaren Kohlenwasserstoffe.

Gemäss US-A- 4 210 733 kann man bei isotherm geführter Polymerisation polymerisierbare Kohlenwasserstoffe mit bis zu 40 Gew.-% des gesamten Ausgangsmaterials an Phenol umsetzen und erhält phenolhaltige Harze mit Erweichungspunkten im Bereich von 50 bis 120 °C. Bei einer Erhöhung des Phenolgehaltes werden Produkte erhalten mit mangelnder Stabilität und störender Farbe. Der Grund ist darin zu sehen, dass das überschüssige Phenol nicht mehr gebunden wird. Die Harze werden dunkel und sie riechen sehr stark nach Phenol.

Aus Gründen der besseren Verträglichkeit der Harze mit anderen Rohstoffen in Klebstoffmischungen ist aber ein höherer Anteil an gebundenem Phenol erwünscht.

Es bestand daher eine Nachfrage nach Kohlenwasserstoffharzen mit möglichst grosser OH-Zahl, die aber nur schwach nach Phenol riechen dürfen.

Diese Aufgabe wird gelöst durch Bereitstellen von phenolhaltigen Kohlenwasserstoffharzen, erhalten durch Copolymerisation von Phenol oder substituierten Phenolen oder Gemischen derselben mit polymerisierbaren Kohlenwasserstoffen aus oben im Temperaturbereich von 140 bis etwa 220 °C siedenden Destillaten aus dem Steinkohlenhochtemperaturteer oder den bei der Crackung von Naphtha oder Gasöl sowie bei der Pyrolyse von Crackrückständen entstehenden und im Bereich von 160–220 °C siedenden Fraktionen mit Friedel-Crafts-Katalysatoren, dadurch gekennzeichnet, dass sie eine OH-Zahl von 6 bis 7 und einen schwachen Phenolgeruch haben, eine Helligkeit (Barrett) bis 1 erreichen und entweder bei Raumtemperatur flüssig sind oder einen Erweichungspunkt bis etwa 40 °C haben.

Diese Kohlenwasserstoffharze werden aus den polymerisierbaren Kohlenwasserstoffen und Phenol oder substituierten Phenolen unter Verwendung von Friedel-Crafts-Katalysatoren erhalten durch ein Herstellungsverfahren, bei dem eine geringe Menge der ungesättigten aromatischen Kohlenwasserstoffe und/oder die gesamte Menge an Phenolen und an Katalysator vorgelegt werden und die Polymerisation durch Zugabe der restlichen polymerisierbaren Kohlenwasserstoffe so gesteuert wird, dass sie nach Erreichen der gewählten Polymerisationstemperatur, die im Bereich von 70 bis 120 °C liegt, isotherm geführt wird.

Es wurde gefunden, dass bei diesem Polymerisationsverfahren Kohlenwasserstoffharze mit einer OH-Zahl von 6–7 hergestellt werden können.

Die Produkte sind hell und haben einen schwachen Geruch, d.h. das eingesetzte Phenol ist vollständig gebunden. Aufgrund der hohen Phenolanteile und damit verbunden der hohen OH-Zahl ist die Verträglichkeit mit verschiedenen Rohstoffen wie z.B. Epoxidharzen verbessert. Von besonderem Vorteil ist die wesentlich verbesserte Methanolverträglichkeit. Die neuen Harze sind mit Methanol nahezu unbegrenzt mischbar, was ihre Anwendung in bestimmte Kleberrezepturen erleichtert. Des weiteren sind die Klebeigenschaften der erfindungsgemässen Harze infolge der zusätzlichen OH-Gruppen verbessert.

Je nach Polymerisationstemperatur, die im Bereich von 70–120 °C liegen kann, erhält man Harze mit unterschiedlichem Erweichungspunkt. Während bei 110–120 °C Harze entstehen, die bei Raumtemperatur flüssig sind, lassen sich bei einer Polymerisationstemperatur von 70 °C Harze mit einem Erweichungspunkt von etwa 40 °C herstellen.

Als Rohstoffe für die erfindungsgemässen Harze dienen Phenole oder substituierte Phenole oder Gemische derselben sowie polymerisierbare Kohlenwasserstoffe. Derartige Kohlenwasserstoffe finden sich einerseits in dem im Temperaturbereich von 140 bis etwa 220 °C siedenden Destillaten aus dem Steinkohlenhochtemperaturteer, andererseits entstehen polymerisierbare Kohlenwasserstoffe bei der Crackung von Naphtha oder Gasöl sowie bei der Pyrolyse von Crackrückständen und sind in einer im Bereich von 160°–220 °C siedenden Fraktion, der sogenannten Harzölfraktion, angereichert. Diese Fraktionen enthalten im wesentlichen Inden, Vinyltoluol, Methylinden, Cumaron, Dicyclopentadien, Methyldicyclopentadien, Styrol und α-Methylstyrol, in einer Konzentration von 50 bis 70% neben nicht reaktiven aromatischen Verbindungen.

Das Verhältnis Phenol oder Phenolgemisch zu polymerisierbaren Verbindungen muss so abgestimmt sein, dass sich stöchiometrisch Additionsprodukte mit einer entsprechenden OH-Zahl bilden können. Die Mengenverhältnisse von Phenol oder Phenolgemisch zu den polymerisierbaren Verbindungen liegen zwischen 42:58 bis 51,8: 48,2 Gew.-%. Die Polymerisation dieser polymerisierbaren Verbindungen erfolgt im allgemeinen mit Hilfe von Säuren oder Friedel-Crafts-Katalysatoren wie z.B. Bortrifluorid-Komplexen oder Aluminiumchlorid.

Zur Durchführung der Polymerisation werden Katalysator und Phenol oder Phenolgemisch vorgelegt. Die Phenolkomponente soll dabei gelöst sein. Es wurde gefunden, dass es zweckmässig ist, als Lösungsmittel einen Teil der Kohlenwasserstofffraktion zu verwenden und somit mit einem Minimum an Lösungsmittel zu arbeiten. Bei Einsatz einer derartigen Lösung startet die Polymerisationsreaktion sofort und muss gegebenenfalls durch Kühlen innerhalb der Temperaturgrenzen gehalten werden. Nach Ablauf dieses ersten Polymerisationsschrittes wird die restliche Harzölfraktion so zugegeben, dass die Polymerisation bei gleicher Temperatur weiterläuft. Enthält das ursprüngliche Reaktionsgemisch noch keine polymerisierbaren Kohlenwasserstoffe, so werden diese so zudosiert, dass zuerst ein Anstieg der Temperatur des Reaktionsgemisches auf die gewünschte Polymerisationstemperatur erfolgt und dass die Temperatur im weiteren Polymerisationsverlauf konstant gehalten wird.

Die Neutralisation des Katalysators und die weitere Aufarbeitung des Harzes erfolgen nach bekannten Verfahren. Das folgende Beispiel zeigt die Herstellung eines erfindungsgemässen Harzes. Die Prozentangaben bedeuten jeweils Gewichtsprozente:

In einem Polymerisationsrührwerk werden 6,0 t einer 55%igen Phenollösung (bestehend aus 80% Phenol und 20% o-Kresol) in einer im Bereich von 178–193 °C siedenden Fraktion von Destillaten aus dem Steinkohlenhochtemperaturteer mit 60% an polymerisierbaren Kohlenwasserstoffen mit 63 kg BF$_3$-Ätherat vermischt.

Während der Polymerisation steigt die Temperatur des Reaktionsgemisches von 20 °C auf 90 °C an und wird durch Kühlen bei 90 °C gehalten. Sobald keine weitere Wärmeentwicklung mehr erfolgt, werden weitere 2,4 t 60%iger Kohlenwasserstoffraktion so dosiert zugegeben, dass die Reaktion isotherm auf 90 °C gehalten wird. Die weitere Aufarbeitung entspricht der herkömmlichen Methode. In 56%iger Ausbeute wird ein Harz erhalten mit einem Erweichungspunkt von 32 °C (Krämer-Sarnow) und einer Helligkeit (Barrett) von 1. Die OH-Zahl des Harzes beträgt 6,5. Es ist nur ein schwacher Phenolgeruch wahrnehmbar.

## Patentansprüche

1. Phenolhaltige Kohlenwasserstoffharze, erhalten durch Copolymerisation von Phenol oder substituierten Phenolen oder Gemischen derselben mit polymerisierbaren Kohlenwasserstoffen aus den im Temperaturbereich von 140 bis etwa 220 °C siedenden Destillaten aus dem Steinkohlenhochtemperaturteer, oder den bei der Crakkung von Naphta oder Gasöl sowie bei der Pyrolyse von Crackrückständen entstehenden und im Bereich von 160°–220 °C siedenden Fraktionen mit Friedel-Crafts-Katalysatoren, dadurch gekennzeichnet, dass sie eine OH-Zahl von 6 bis 7 und einen schwachen Phenolgeruch haben, eine Helligkeit(Barrett) bis 1 erreichen und entweder bei Raumtemperatur flüssig sind oder einen Erweichungspunkt bis etwa 40 °C haben.

2. Verfahren zur Herstellung der Kohlenwasserstoffharze nach Anspruch 1 aus polymerisierbaren Kohlenwasserstoffen und Phenol oder substituierten Phenolen unter Verwendung von Friedel-Crafts-Katalysatoren, dadurch gekennzeichnet, dass die Mengenverhältnisse von Phenol oder Phenolgemisch zu den polymerisierbaren Verbindungen im Bereich von 42 zu 58 bis 51,8: 48,2 Gew.-% liegen und dass eine Teilmenge der polymerisierbaren Kohlenwasserstoffe und/oder die gesamte Menge an Phenolen und an Katalysator vorgelegt werden und die Polymerisation durch Zugabe der restlichen polymerisierbaren Kohlenwasserstoffe so gesteuert wird, dass die nach Erreichen der gewählten Polymerisationstemperatur, die im Bereich von 70 bis 120 °C liegt, isotherm geführt wird.

3. Verfahren nach Anspruch 2, dadurch gekennzeichnet, dass als polymerisierbare Kohlenwasserstoffe eine im Temperaturbereich von 178–193 °C siedende Fraktion von Destillaten aus dem Steinkohlenhochtemperaturteer verwendet wird.

## Revendications

1. Résines hydrocarbonées contenant du phénol, obtenus par copolymérisation, en présence de catalyseurs de Friedel et Crafts, du phénol ou de phénols substitués, ou de mélanges de phénols de ce genre, avec des hydrocarbures polymérisables provenant de distillats du goudron de houille haute température qui passent entre 140 et environ 220 °C, ou des fractions qui se forment lors du craquage du naphte ou du gazole ainsi que dans la pyrolyse de résidus de craquage et qui bouillent entre 160 et 220 °C, résines caractérisées en ce qu'elles ont un indice d'hydroxyle de 6 à 7 et une faible odeur de phénol, en ce que leur clarté (Barrett) peut aller jusqu'à 1 et en ce que, suivant le cas, elles sont liquides à la température ambiante ou elles ont un point de ramollissement pouvant s'élever jusqu'à environ 40 °C.

2. Procédé pour préparer des résines hydrocarbonées selon la revendication 1, à partir d'hydrocarbures polymérisables et du phénol ou de phénols substitués, au moyen de catalyseurs de Friedel et Crafts, procédé caractérisé en ce que le rapport entre la quantité de phénol ou du mélange de phénols et la quantité des composés polymérisables est compris entre 42:58 et 51,8:48,2 en poids, en ce qu'on met d'abord en place une partie des hydrocarbures polymérisables et/ou la quantité totale des phénols et du catalyseur et on règle la polymérisation en ajoutant les hydrocarbures polymérisables restants à un débit tel qu'elle soit exécutée à température constante lorsque la température de polymérisation a atteint la valeur voulue, laquelle est comprise entre 70 et 120 °C.

3. Procédé selon la revendication 2, caractérisé en ce qu'on utilise, comme hydrocarbures polymérisables, une fraction de distillats provenant du goudron de houille haute température, fraction qui bout dans l'intervalle de température allant de 178 à 193 °C.

## Claims

1. Phenol containing hydrocarbon resins, obtained by copolymerization of phenol or substituted phenols or mixtures of themselves with polymerizable hydrocarbons derived from distillates of high-temperature coal-tar boiling in the temperature range from 140 to about 220 °C, or from fractions boiling in the temperature range from 160 to 220 °C, which are formed when naphtha or gas oil is cracked and also when residues from cracking are pyrolised in the presence of Friedel-Crafts catalysts, characterized in that they have an OH number of 6 to 7 and a slight odor of phenol, that they come up to a lightness (Barrett) of 1 and that they are either liquid at room temperature or have a softening point of about 40 °C.

2. A process for the preparation of hydrocarbon resins of claim 1 from unsaturated aromatic hydrocarbons and phenol or substituted phenols, using Friedel-Crafts catalysts, comprising the proportions of phenol or phenol mixture to the polymerizable compounds being in the range of 42:58 to 51,8:48,2% by weight and initially taking a part quantity of the unsaturated aromatic hydrocarbons and/or the whole quantity of phenols and of catalyst, and controlling the polymerization at such a rate, by adding the remaining unsaturated aromatic hydrocarbons, that, after reaching the desired polymerization temperature, which is in the range from 70–120 °C, the polymerization is carried out under isothermal conditions.

3. The process as claimed in claim 2, wherein the unsaturated aromatic hydrocarbons used are a fraction, boiling within the temperature range from 178–193 °C, of distillates from high-temperature coal-tar.